(19) **Europäisches Patentamt**

**European Patent Office**

**Office européen des brevets**

(11) Publication number: **0 289 774 B1**

(12) **EUROPEAN PATENT SPECIFICATION**

(45) Date of publication of patent specification: **25.03.92**    (51) Int. Cl.⁵: **C09J 133/08**, C09J 133/10

(21) Application number: **88104823.5**

(22) Date of filing: **25.03.88**

(54) **Improved adhesive polymer compositions.**

(30) Priority: **30.03.87 DE 3710441**

(43) Date of publication of application:
**09.11.88 Bulletin 88/45**

(45) Publication of the grant of the patent:
**25.03.92 Bulletin 92/13**

(84) Designated Contracting States:
**AT CH DE ES FR GB GR IT LI NL SE**

(56) References cited:
**EP-A- 0 048 950**
**DE-B- 1 494 002**

**DERWENT JAPANESE PATENT GAZETTE, no. 84-291364, Derwent Publications Ltd, London, GB; & JP-A-59 179 511 (JAPAN SYNTHETIC RUBBER) 12-10-1984**

(73) Proprietor: **THE DOW CHEMICAL COMPANY**
**2030 Dow Center Abbott Road P.O. Box 1967**
**Midland Michigan 48640-1967(US)**

(72) Inventor: **Rance, Robert W.**
**10c Mühlenstrasse**
**W-7580 Bühl(DE)**
Inventor: **Lazarus, Etienne R.D.A.**
**6 rue du Pivert**
**F-67500 Hagenau(FR)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

## Description

The present invention relates to improved adhesive polymers and particularly to aqueous emulsion polymerised latexes using a minor amount of conjugated diene monomer to crosslink the polymer. These latexes are very suitable for use as pressure sensitive adhesives and for use in preparing articles comprising surfaces coated with such pressure sensitive adhesive polymers.

As used in the art, the term "pressure sensitive adhesive" designates a polymeric material which in solvent-free form is aggressively and permanently tacky at room temperature, and will firmly adhere to a variety of dissimilar surfaces upon mere contact without the need of more than finger or hand pressure.

The most important properties recognized by the pressure sensitive adhesive industry are adhesion, peel strength, "tack" and resistance to shear. The addition of a tackifier can improve the tack properties exhibited by a pressure sensitive adhesive at room temperature. Unfortunately, most tackifiers serve as plasticizers and promote shear failures.

In preparing adhesive polymers, and especially adhesive latex polymers, it is known to improve the shear resistance of the adhesive by crosslinking the polymer. This typically involves addition to the polymerization mixture of carefully controlled amounts of highly reactive comonomers which are specially suited to crosslinking. In the Handbook of Pressure-Sensitive Adhesive Technology, p. 314, the suggested crosslinking functional groups for acrylic-based adhesive resins are carboxylic, hydroxyl, epoxy, allylic double bond, amide and amine. Examples of prior art crosslinking agents for use in pressure sensitive adhesives include allylmethacrylate, polyethylene glycol dimethacrylate and diallyl phthalate. These have not been found to provide optimized property combinations and especially not in all adhesive polymer types. Furthermore, due to their reactivity, it is necessary to control very carefully the very small amounts of such crosslinking agents used to achieve the proper amount of crosslinking in the final polymer. It is therefore very difficult in commercial-scale production processes to use such prior art crosslinking agents and achieve reproducible and consistent levels of crosslinking throughout large amounts of latex and between different batches.

It is also generally known that (meth)acrylate-based adhesive latex polymers can be prepared containing conjugated diene monomers such as 1,3-butadiene (EP 48 950 and JP 59-47212) and monochloro-1,3-butadiene (JP 59-179511). Such dienes are, however, used in amounts greater than or equal to 10 weight percent (though lower levels are generally mentioned) as a supplement to or a partial replacement for the rubbery (meth)acrylate monomer.

It would therefore be highly desirable to provide an improved polymer which has consistently excellent adhesive, cohesive and shear strength properties.

This object is attained by an adhesive polymer of

(a) one or more (meth)acrylic acid ester monomer(s) represented by the formula $CH_2 = CR^1\text{-}COOR^2$, wherein $R^1$ is H or a methyl radical, $R^2$ is a hydrocarbyl radical of 1 to 20 carbon atoms,
(b) 0 to less than 20 weight percent based on adhesive polymer weight of one or more monovinylidene aromatic monomer(s) represented by the formula

$Ar\text{-}CR^3 = CH_2$;

wherein $R^3$ is H or a 1 to 4 carbon atom alkyl radical, and Ar is phenyl or phenyl substituted with halogen and/or 1 or more hydrocarbyl radicals having 1 to 4 carbon atoms,
(c) a conjugated diene which crosslinks the polymer, wherein said diene is represented by the formula $CH_2 = C(R^4)\text{-}C(R^5) = C(R^6)R^7$, wherein $R^4$, $R^5$, $R^6$ and $R^7$ are independently H, halogen or 1 to 20 carbon hydrocarbyl radicals

**characterized in that**
the amount of the (meth)acrylic acid ester monomer(s) (a) is from greater than 80 to 99.5 weight percent and the amount of the conjugated diene monomer(s) (c) is from 0.5 to 5 weight percent based on adhesive polymer weight.

This polymer is preferably prepared and utilized in the form of an aqueous dispersion or latex. In one embodiment, a minor portion of ethylenically unsaturated carboxylic acid monomers such as itaconic, maleic, fumaric or (meth)acrylic acid can also be incorporated. In yet another embodiment, a pressure sensitive adhesive composition is prepared which additionally comprises a tackifying resin in amounts of from 1 to 40 percent by weight on a total solids basis, more preferably from 10 to 40, and most preferably from 20 to 40, percent by weight on a total solids basis.

The excellent adhesive characteristics of the present adhesive polymer composition make it particularly suitable for use as a pressure sensitive adhesive (PSA). In particular, an excellent balance of shear bond, peel and tack is provided by the (meth)acrylate polymers which are crosslinked by the use of up to 5 weight percent of conjugated diene.

The critical monomer which is employed in major proportion to prepare the pressure sensitive adhesive polymer of this invention is the ethylenically unsaturated (meth)acrylic acid ester. As used herein, this term includes the esters of acrylic and methacrylic acids. These monomers are generally represented by the formula:

$$CH_2 = CR_1\text{-}CO\text{-}O\text{-}R_2 \qquad I$$

wherein $R_1$ is -H or methyl radical and $R_2$ is a hydrocarbyl radical having 1 to 20 carbon atoms. Preferably, $R_1$ is -H. Preferably, $R_2$ is either a methyl, ethyl, butyl or 2-ethyl hexyl radical. Common examples, include n-butyl acrylate, 2-ethylhexyl acrylate, iso-octyl acrylate, n-dodecyl acrylate, 2-methylbutyl acrylate, methyl methacrylate, ethyl acrylate, and the like. In general it is preferred to use the (meth)acrylate monomer in amounts (based on weight of the adhesive polymer) of greater than 80 to 99.5 weight percent, and most preferably greater than 80 to 98.5 weight percent.

While there are many different crosslinking compounds suggested for use in (meth)acrylate-type polymers, it has been found that conjugated diene compounds, when used in amounts of 0.5 to 5 weight percent based on the adhesive polymer weight provide optimal properties for adhesive applications. These are generally well-known monomers for other applications and are represented by the formula:

$$CH_2 = C(R_4)\text{-}C(R_5) = C(R_6)\text{-}R_7 \qquad II$$

wherein $R_4$, $R_5$, $R_6$ and $R_7$ are independently -H, halogen or 1 to 20 carbon hydrocarbyl radicals. Preferably, $R_4$ is a -H, chloro- or methyl radical and $R_5$, $R_6$ and $R_7$ are -H, (i.e., the conjugated diene is butadiene, isoprene or chloroprene). Most preferably butadiene is used as the conjugated diene.

It has been found that the optimized level of crosslinking is obtained when using 0.5 to 5 weight percent conjugated diene. In this range the combination of cohesive, adhesive, tack and shear strength properties is optimized. It is preferred to use from 1 to 5 weight percent, and more preferred to use 1.5 to 4 weight percent. Preferably, the adhesive polymer is thereby crosslinked to the degree that it is substantially insoluble in tetrahydrofuran at 20°C.

Monovinylidene aromatic monomers are commonly employed in preparing pressure sensitive adhesives, and are advantageously used in the polymers according to the present invention. These monomers are generally represented by the formula:

$$Ar\text{-}CR_3 = CH_2 \qquad III$$

wherein Ar is phenyl or phenyl substituted with halogen and/or 1 or more hydrocarbyl radical(s) having 1 to 4 carbon atoms and $R_3$ is -H or a 1 to 4 carbon alkyl radical. Preferred examples of such monomers include alphamethyl styrene and one or more of the vinyl toluene isomers, with styrene being the most preferred.

These monovinylidene aromatic monomers are typically used in the polymers according to the present invention in amounts of 0 to less than 20 weight percent, these weight percentages being based on the adhesive polymer weight.

It is also advantageous to employ in the polymers according to the present invention minor amounts of unsaturated carboxylic acid monomer(s). These can be mono-or multi-functional acid monomers and are preferably acrylic, methacrylic, itaconic, maleic and/or fumaric acid. If used, this component is typically employed in amounts of 0 to 10 weight percent based on adhesive polymer weight, preferably in amounts of 1 to 5 weight percent.

It is also possible to employ in minor amounts (i.e., less than 10 weight percent) other known polymerizable monomers such as acrylonitrile, vinyl acetate, vinyl propionate, vinyl chloride, vinylidene chloride and the ethylenically unsaturated sulfonic acids such as 2-acrylamido-2-methylpropane sulfonic acid.

As mentioned above, the conjugated diene compound is a crosslinking monomer in the present invention. In this regard, the polymerization conditions employed must be suitable in terms of temperature and other conditions to be able to achieve the crosslinking activity of the conjugated diene. In general, polymerization temperatures in the range of 40 to 110°C can be used in latex polymerizations. However it is preferred to use temperatures in the range of 70 to 100°C in order to achieve the necessary rate and total amount of conjugated diene-initiated crosslinking. The temperature is preferably in the range of 75 to 95°C, more preferably in the range of 80 to 95°C. It is also very desirable in achieving the necessary crosslinking throughout the polymer to add the diene crosslinking agent continuously, with the monomers, throughout the polymerization reaction.

Regarding the use of chain transfer agents in preparing the resins according to this invention, it has been found particularly desirable to use mercaptan chain transfer agents and preferably tertiarydodecyl mercaptan. More specifically, 0.25 to 2.0 weight parts mercaptan based on 100 weight parts polymerizable monomer are desirable and 0.5 to 1.25 weight parts are preferred.

In aspects other than the use of diene crosslinking, the polymers can be prepared using conventional emulsion polymerization techniques. For example, it is possible to use conventional initiators, emulsifiers, etc. The reaction is typically carried out in an oxygen-free, agitated, temperature controlled reaction environment for sufficient time to convert the monomers to polymer.

While the polymeric composition as described above is, itself, suitable for use as an adhesive material, it is generally desirable to incorporate a tackifier resin. Thus, a pressure-sensitive adhesive composition according to this invention can comprise the latex composition described above and a tackifying resin emulsion or tackifier. Tackifying resins useful in the preparation of the pressure sensitive adhesive are commercially available and are generally disclosed in U.S. Patent 4,189,419. Typical tackifying resins include emulsified resin, partially decarboxylated rosin, glycerol ester of polymerized rosin, partially dimerized rosin, natural resin, hydrogenated wood rosin, plasticized hydrogenated rosin, aliphatic hydrocarbon resins derived from petroleum, aromatic resins derived from petroleum, terpene resins, coal tar polyindene resins, ethylene vinyl acetate copolymer resins, terpene phenolics, coumarone-indenes, rosin esters, pentarythrital esters, and polydicyclobutadiene resins. The properties of the adhesive composition can be varied for particular applications by the selection of an appropriate tackifying resin.

The particular tackifiers employed can also contain conventional additives such as softeners, plasticisers, antioxidants, inert fillers and the like which can be emulsified along with the tackifying resin or emulsified separately and mixed with the tackifying resin emulsion.

Tackifiers are desirably added in an amount such that the latex is given additional tack (quick stick and peel adhesion) without detracting unduly from the shear adhesion. Suitable formulations will typically comprise from 1 to 40 percent, more preferably 10 to 40 percent, and most preferably from 20 to 40 percent tackifier by weight on a total solids basis (i.e., adhesive polymer plus tackifier) in the formulation.

Typically the pressure-sensitive adhesive composition can be prepared by blending the desired amount of latex and tackifier in any conventional manner. It is understood that no requirement or limitation to the scope of the invention is intended as to how the latex and tackifier components are combined.

The compositions of the present invention may be used as the adhesive component in pressure sensitive tapes, labels, films and foams. They adhere well to polymer surfaces such as plasticized poly(vinyl chloride), Mylar brand polyester film, cellulose acetate, nylon, polyethylene and polypropylene, as well as to paper, metal and painted surfaces. They are especially useful as the adhesive components of labels, tapes, decorative vinyl sheets, decals, vinyl foam and tiles.

Articles of manufacture such as labels, tapes, decals, decorative vinyl sheets and transfer films containing the pressure sensitive resin composition of the present invention are prepared by coating the adhesive resin directly on the appropriate substrate by conventional coating methods. Such articles may include a conventional release paper for temporary protection on the adhesive film until the final adhesive bond is made. Alternatively, the adhesive may be coated onto a release paper and then transferred to second surface which is desired to be coated by passing both together through rollers. The thickness of the adhesive film is generally in the range of 5 to 125 microns.

Application of the film to the substrate is conventionally carried out on roll coaters such as reverse roll and gravure roll coaters. The resin emulsion viscosity is adjusted to between 25 and 5,000 mPa•s (centipoises) with higher viscosities within the range preferred for reverse roll coating and lower viscosities within the range preferred for gravure coating.

While the present invention has been described with particular reference to certain specific embodiments thereof, it will be understood that certain changes, substitutions and modifications may be made therein without departing from the scope thereof. This invention also contemplates the use of fillers, extenders, stabilisers, antioxidants, plasticizers, flow control agents, adhesion promoters, dyes, etc. in the pressure sensitive resin emulsions and the pressure sensitive resins of this invention.

The present invention will be further illustrated in the following experiments. Unless otherwise specified, all amounts are in parts by weight and temperatures in ° C.

To prepare the sample compositions described and evaluated in the following tables the amounts of monomers indicated in the table were fed continuously to a heated, agitated latex polymerization reactor which had been purged with nitrogen. The reactor was initially supplied with 65.39 weight parts water, 0.02 weight parts Versenol® 120 brand EDTA chelating agent, and 0.50 weight parts (based on solids) of a styrene polymer seed latex having a volume average particle size of 30 nanometers (nM). This initial charge was then heated to 90°C and, for the individual experiments, the monomer feed indicated in the following tables was supplied over a period of 240 minutes. A second feed containing 29.3 weight parts water, 0.7 weight parts sodium persulfate initiator, a 0.60 weight parts Dowfax® 2A1 brand alkylated diphenyloxide disulphonate surfactant and 0.20 weight parts sodium hydroxide was also started at the same time as the first and continuously supplied for 240 minutes. During the polymerization reaction the temperature was maintained at 90°C. Versenol and Dowfax are trademarks of The Dow Chemical Company.

After the polymerization was completed the solids level was about 50 percent by weight. At that time the remaining minor amounts of unpolymerized monomer were devolatilized with the resulting adhesive polymer having the composition of the monomer feed. The average particle size was 0.16 micrometer as measured by known light scattering techniques and there was no waste or residue after being run through 100 and 325 mesh screen. The sample adhesive resins were coated onto release paper at a coating weight of about 20 g/m$^2$ using a wire wound rod. The adhesive layer was then transferred to a face stock paper sheet by passing between two nip rollers. Shear adhesion was measured by fixing an area of 6.45 cm$^2$ to a steel plate and measuring the time in minutes (min) for the sample to be removed at an angle of 2° with a 1000 grams (g) weight attached.

The tack of the samples was measured by the Rolling Ball method. A section of the adhesive coated sheet was placed on a flat surface with the adhesive side facing up. A 1.1 centimeter (cm) diameter steel ball was rolled onto the adhesive layer from an 8 cm long V-shaped channel inclined at an angle of 30°. The distance the ball travelled before stopping is given in cm and was a measure of the tack, with the shorter the distance the greater the tack.

## TABLE I - Effect of Butadiene

| Experiment No. | 1* | 2 | 3 | 4 | 5* |
|---|---|---|---|---|---|
| **Monomer Feed** | | | | | |
| n-Butyl Acrylate | 97 | 96 | 94.5 | 93 | 88 |
| Acrylic Acid | 3 | 3 | 3 | 3 | 3 |
| Butadiene | 0 | 1 | 2.5 | 4 | 9 |
| Tertiarydodecyl Mercaptan | 0.5 | 0.5 | 0.5 | 0.5 | 0.5 |
| Carbontetra- chloride | 3 | 3 | 3 | 3 | 3 |
| **Product Properties** | | | | | |
| Shear Strength (min) | 19 | 69 | 111 | 107 | 12 |
| Tack (cm) | 3.5 | 4 | 8 | 10 | 19 |

**\* Not an example of the present invention**

As can be seen in Table I above, the use of the butadiene in amounts of 1, 2.5 and 4 weight percent based on polymer weight provides coatings with surprisingly improved adhesive shear strength while maintaining good tack properties. In Table II below the samples were prepared in the same fashion as described above with the exception that the amount of tertiarydodecyl mercaptan is varied and it is supplied to the reactor in the initial charge.

## TABLE II - Effect of Chain Transfer Agent

| Experiment No. | 6 | 7 | 8 | 9 | 10 | 11 |
|---|---|---|---|---|---|---|
| **Monomer Feed** | | | | | | |
| n-Butyl Acrylate | 96 | 96 | 96 | 96 | 96 | 96 |
| Acrylic Acid | 3 | 3 | 3 | 3 | 3 | 3 |
| Butadiene | 1 | 1 | 1 | 1 | 1 | 1 |
| Carbontetra-chloride | 3 | 3 | 3 | 3 | 3 | 3 |
| Tertiarydodecyl Mercaptan | 0 | 0.25 | 0.5 | 0.75 | 1.25 | 2 |
| **Product Properties** | | | | | | |
| Shear Strength (min) | 11 | 14 | 22 | 59 | 34 | 13 |
| Tack (cm) | 12 | 10.5 | 8.5 | 7 | 5.5 | 2.5 |

As can be seen in Table II above, the adhesive properties were optimized in the range of 0.25 to 2.0 weight parts tertiarydodecylmercaptan addition (based on 100 weight parts monomers), with amounts in the range 0.5 to 1.25 giving the best results for the adhesive polymers according to the present invention.

In Table III below it is shown that the inclusion of styrene into such latexes provides improved shear strength to the adhesive compositions. The compositions are prepared according to the process of Experiment 1 above.

6

## TABLE III - Effect of Styrene Inclusion

*Comparative example*

| Experiment No. | 2 | 12 | 13 |
|---|---|---|---|
| **Monomer Feed** | | | |
| Butyl Acrylate | 96 | 88 | 79 |
| Acrylic Acid | 3 | 3 | 3 |
| Butadiene | 1 | 1 | 1 |
| Styrene | 0 | 8 | 17 |
| Tertiarydodecyl Mercaptan | 0.5 | 0.5 | 0.5 |
| Carbontetra-chloride | 3 | 3 | 3 |
| **Product Properties** | | | |
| Shear Strength (min) | 69 | 232 | 1800 |
| Tack (cm) | 4 | 12 | 20 |

Table IV below shows that the compositions according to the present invention can also comprise further tackifier for enhancement of the tack properties. In the tack test used below the tack is determined by the Rolling Ball method. The sample latex composition of experiment number 2 above was blended with the indicated amounts of Snowtack® 42 CF brand plasticised disproportionated rosin based tackifier. Snowtack 42 CF is a trademark of Tenneco.

TABLE IV

| TACKIFIER EFFECT | | |
|---|---|---|
| Experiment No. | Weight % Tackfier | Tack (cm) |
| 2 | 0 | 11 |
| 14 | 10 | 9.5 |
| 15 | 20 | 8.5 |
| 16 | 30 | 6.5 |
| 17 | 40 | 11.5 |
| 18 | 50 | 16.5 |
| 19 | 60 | >20 |
| 20 | 70 | >20 |
| 21 | 80 | >20 |
| 22 | 90 | >20 |
| 23 | 100 | >20 |

Although their effect will vary somewhat, it has been found desirable to use as tackifiers in the present adhesive compositions disproportionated rosin emulsion (eg. Snowtack® 301 CF), alkylaryl hydrocarbon resin emulsion (eg. Piccovar® AP 25) or alphamethylstyrene/vinyl toluene resin dispersion (eg. Piccotex® 75). Snowtack® 301CF is a trademark of Tenneco and Piccovar AP 25 and Piccotex 75 are trademarks of Hercules Inc.

In the following Table V it is illustrated that 2-ethylhexyl acrylate (EHA) can be used as the acrylic acid ester and itaconic acid (IA) or hydroxyethylacrylate (HEA) can be employed in the compositions according to the invention. These samples are prepared according to the process of Experiment 1 with the tertiary dodecyl mercaptan in Experiment 2 being supplied in the monomer feed and in Experiments 25 and 26 in the initial reactor charge. In Table V "Bu A" refers to n-butylacrylate, "AA" to acrylic acid and "B" to butadiene.

## TABLE V

| Experiment No. | 2 | 24 | 25 | 26 |
|---|---|---|---|---|
| **Monomer Feed** | | | | |
| Amount/type | 96/Bu A | 96/EHA | 97/Bu A | 94/Bu A |
| | 3/AA | 3/AA | 2/IA | 5/HEA |
| | 1/B | 1/B | 1/B | 1/B |
| **Chain Transfer Agents** | | | | |
| tertiary dodecyl mercaptan | 0.5 | -- | 0.5 | 0.5 |
| carbontetrachloride | 3 | 3 | 3 | 3 |
| **Product Properties** | | | | |
| Shear Strength (min) | 69 | 21 | 155 | 98 |
| Tack (cm) | 4 | 3.5 | 6 | 4 |

Experiment 27

In the process described above a latex polymer was prepared from 2.5 parts butadiene, 94.5 parts n-butyl acrylate and 3 parts acrylic acid. Octyl thioglycolate was used as the chain transfer agent. The resultant polymer was evaluated and found to have good adhesive properties: a rolling ball tack of 8 cm and a shear strength measurement of 22 minutes.

## Claims

1. An adhesive polymer of
   (a) one or more (meth)acrylic acid ester monomer(s) represented by the formula $CH_2 = CR^1\text{-}COOR^2$, wherein $R^1$ is H or a methyl radical, $R^2$ is a hydrocarbyl radical of 1 to 20 carbon atoms,
   (b) 0 to less than 20 weight percent based on adhesive polymer weight of one or more monovinylidene aromatic monomer(s) represented by the formula

   $Ar\text{-}CR^3 = CH_2$;

   wherein $R^3$ is H or a 1 to 4 carbon atom alkyl radical, and Ar is phenyl or phenyl substituted with halogen and/or 1 or more hydrocarbyl radicals having 1 to 4 carbon atoms,
   (c) a conjugated diene which crosslinks the polymer, wherein said diene is represented by the formula $CH_2 = C(R^4)\text{-}C(R^5) = C(R^6)R^7$, wherein $R^4$, $R^5$, $R^6$ and $R^7$ are independently H, halogen or 1 to 20 carbon hydrocarbyl radicals
   **characterized in that**
   the amount of the (meth)acrylic acid ester monomer(s) (a) is from greater than 80 to 99.5 weight percent and the amount of the conjugated diene monomer(s) (c) is from 0.5 to 5 weight percent based on adhesive polymer weight.

2. The polymer according to claim 1
   **characterized in that**
   the monomer (a) is an alkylester of acrylic acid, monomer (b) is styrene, the monomer (c) is butadiene

8

or isoprene and the polymer comprises polymerized therein (d) 0 to 10 weight percent unsaturated carboxylic acid monomer(s) and the polymer is substantially insoluble in tetrahydrofuran at 20°C.

3. The polymer according to Claim 1 or 2
   **characterized by**
   further comprising from 10 to 40 weight percent tackifier based on total solids.

4. The polymer according to Claim 1
   **characterized by**
   the form of a latex.

5. The polymer according to Claim 1
   **characterized in that**
   the monomer(s) (a) is (are) an alkyl ester of acrylic acid present in an amount greater than 80 to 98.5 weight percent, the conjugated diene monomer (c) is butadiene or isoprene present in an amount from 1.5 to 4 weight percent, and the polymer comprises polymerized therein (d) 0 to 10 weight percent unsaturated carboxylic acid monomer(s) and the polymer is substantially insoluble in tetrahydrofuran at 20°C.

**Revendications**

1. Polymère adhésif comportant
   (a) un ou plusieurs monomère(s) d'ester d'acide (méth)acrylique représentés par la formule $CH_2 = CR^1\text{-}COOR^2$ dans laquelle $R_1$ est H ou un radical méthyle, $R^2$ est un radical hydrocarbyle à 1 à 20 atomes de carbone.
   (b) 0 à moins de 20 pour cent en poids, sur la base du poids de polymère adhésif, d'un ou plusieurs monomères aromatiques de monovinylidène représenté par la formule

   $$Ar\text{-}CR^3 = CH_2;$$

   où $R^3$ est H ou un radical alkyle à 1 à 4 atomes de carbone et Ar est un phényle ou un phényle substitué à l'aide d'un halogène et/ou un ou plusieurs radicaux hydrocarbyle à 1 à 4 atomes de carbone,
   (c) un diène conjugué qui réticule le polymère, où ledit diène est représenté par la formule $CH_2 = C(R^4)\text{-}C(R^5) = C(R^6)R^7$ où $R^4$, $R^5$, $R^6$ et $R^7$ sont indépendamment H, un halogène ou des radicaux hydrocarbyle à 1 à 20 atomes de carbone,
   **caractérisé en ce que**
   la quantité de monomère(s) d'ester d'acide (méth)acrylique (a) est comprise entre plus de 80 et 99,5 pour-cent en poids et la quantité du ou des monomère(s) de diène conjugué (c) est comprise entre 0,5 et 5 pour-cent en poids sur la base du poids du polymère adhésif.

2. Polymère selon la revendication 1
   **caractérisé en ce que**
   le monomère (a) est un alkylester d'acide acrylique, le monomère (b) est du styrène, le monomère (c) est du butadiène ou de l'isoprène et le polymère comprend, sous forme polymérisée (d) 0 à 10 pour cent en poids de monomère(s) d'acide carboxylique non saturé et le polymère est sensiblement insoluble dans du tétrahydrofuranne à 20°C.

3. Polymère selon la revendication 1 ou 2
   **caractérisé en ce qu'**
   il comprend en outre de 10 à 40 pour- cent en poids, sur la base des solides totaux, d'un composé collant.

4. Polymère selon la revendication 1
   **caractérisé par**
   une forme de latex.

5. Polymère selon la revendication 1

EP 0 289 774 B1

**caractérisé en ce que**

le ou les monomère(s) (a) est (sont) un ester alkyle d'acide acrylique présent en quantité supérieure à 80, pouvant atteindre 98,5, pour- cent, le monomère de diène conjugué (c) et du butadiène ou de l'isoprène présent en quantité de 1,5 à 4 pour cent en poids et le polymère comprend, sous forme polymérisée (d) 0 à 10 pour- cent en poids de monomère(s) d'acide carboxylique et le polymère est sensiblement insoluble dans le tétrahydrofuranne à 20°C.

**Patentansprüche**

1. Klebstoffpolymer aus

(a) einem oder mehreren (Meth)acrylsäureestermonomer(en) der Formel $CH_2 = CR^1\text{-}COOR^2$ , in der $R^1$ Wasserstoff oder eine Methylgruppe ist, $R^2$ ein Kohlenwasserstoffrest mit 1-20 Kohlenstoffatomen ist,

(b) 0 bis weniger als 20 Gew.-%, bezogen auf Gewicht des Klebstoffpolymeren, eines oder mehrerer monovinylidenaromatischer Monomeren der Formel

$Ar\text{-}CR^3 = CH_2$ ,

in der $R^3$ Wasserstoff oder eine Alkylgruppe mit 1-4 Kohlenstoffatomen ist und Ar ist Phenyl oder Phenyl substituiert mit Halogen und/oder einem oder mehreren Kohlenwasserstoffrest(en) mit 1-4 Kohlenstoffatomen,

(c) einem konjugierten Dien, das das Polymer vernetzt, wobei das Dien die Formel aufweist $CH_2 = C\text{-}(R^4)\text{-}C(R^5) = C(R^6)R^7$, in der $R^4$, $R^5$, $R^6$ und $R^7$ unabhängig voneinander Wasserstoff, Halogen oder Kohlenwasserstoffreste mit 1-20 Kohlenstoffatomen sind,

**dadurch gekennzeichnet,**

daß die Menge des(der) (Meth)acrylsäureestermonomer(en) (a) von größer als 80-99,5 Gew.-% und die Menge des(der) konjugierten Dienemonomer(en) (c) von 0,5-5 Gew.-%, bezogen auf Gewicht des Klebstoffpolymer, beträgt.

2. Polymer nach Anspruch 1,
**dadurch gekennzeichnet,**
daß das Monomer (a) ein Alkylester von Acrylsäure ist, das Monomer (b) Styrol ist, das Monomer (c) Butadien oder Isopren ist und das Polymer einpolymerisiert enthält (d) 0-10 Gew.-% ungesättigte(s) Carbonsäuremonomer(e) und das Polymer bei 20°C in Tetrahydrofuran im wesentlichen unlöslich ist.

3. Polymer nach Anspruch 1 oder 2,
**dadurch gekennzeichnet,**
daß es weiterhin von 10-40 Gew.-%, bezogen auf Gesamtfeststoffe, eines klebrigmachenden Mittels enthält.

4. Polymer nach Anspruch 1,
**dadurch gekennzeichnet,**
daß es die Form eines Latex hat.

5. Polymer nach Anspruch 1,
**dadurch gekennzeichnet,**
daß das(die) Monomere(n) (a) ein Alkylester von Acrylsäure ist(sind), vorhanden in einer Menge größer als 80-98,5 Gew.-%, das konjugierte Dienmonomer (c) Butadien oder Isopren ist, vorhanden in einer Menge von 1,5-4 Gew.-%, und das Polymer einpolymerisiert enthält (d) 0-10 Gew.-% ungesättigte(s) Carbonsäuremonomer(e) und das Polymer bei 20°C in Tetrahydrofuran im wesentlichen unlöslich ist.